# EUROPÄISCHE PATENTSCHRIFT

(11) **EP 4 521 059 B1**
(45) Veröffentlichungstag und Bekanntmachung des Hinweises auf die Patenterteilung: **04.11.2026**
(21) Anmeldenummer: 23196649.0
(22) Anmeldetag: 11.09.2023
(51) Int. Cl.: G01B 21/04, G01B 21/20, G05B 19/4097

(54) **AUSWERTUNG VON MESSDATEN AUS DER VERMESSUNG EINES WERKSTÜCKS DURCH ZUMINDEST EIN KOORDINATENMESSGERÄT**
EVALUATION OF MEASUREMENT DATA FROM THE MEASUREMENT OF A WORKPIECE BY AT LEAST ONE COORDINATE MEASURING DEVICE
ÉVALUATION DE DONNÉES DE MESURE À PARTIR DE LA MESURE D'UNE PIÈCE À USINER AU MOYEN D'AU MOINS UN APPAREIL DE MESURE DE COORDONNÉES

(43) Veröffentlichungstag der Anmeldung: 12.03.2025
(73) Patentinhaber: Carl Zeiss Industrielle Messtechnik GmbH, 73447 Oberkochen (DE)
(72) Erfinder: Enzweiler, Tim, 73431 Aalen (DE)
(74) Vertreter: Brunotte, Joachim Wilhelm Eberhard

(56) Entgegenhaltungen:
- CN-A- 109 635 518
- US-A1- 2011 087 358

## Beschreibung

Die Erfindung betrifft ein Verfahren zum Auswerten von Messdaten aus der Vermessung eines Werkstücks durch zumindest ein Koordinatenmessgerät. Ferner betrifft die Erfindung eine Vorrichtung zur Durchführung des Verfahrens.

Unter den Begriff Koordinatenmessgerät fallen jegliche Arten von Geräten, mit denen sich Koordinaten von Werkstücken ermitteln lassen. Bei einer Klasse von Koordinatenmessgeräten handelt es sich bei den Koordinaten um Oberflächenkoordinaten, d. h es werden Koordinaten von Oberflächenpunkten von Werkstücken ermittelt. Eine andere Klasse von Koordinatenmessgeräten ist alternativ oder zusätzlich in der Lage, Koordinaten im Inneren von Werkstücken zu ermitteln. Hierzu gehören Koordinatenmessgeräte, die invasive, in den Werkstoff des Werkstücks eindringende Strahlung nutzen und insbesondere die Intensität der durch das Werkstück hindurchtretenden Strahlung messen. Typischerweise wird das Werkstück aus verschiedenen Richtungen durchstrahlt und wird anhand der Ergebnisse der Durchstrahlung eine insbesondere computergestützte Rekonstruktion des erfassten Werkstücks durchgeführt. Derartige Verfahren werden auch als Computertomografie (CT) bezeichnet. Unter den Begriff Koordinatenmessgerät fallen aber auch klassische Koordinatenmessgeräte, zum Beispiel Geräte in Portalbauweise oder Gantrybauweise, insbesondere Koordinatenmessgeräte mit einer verfahrbaren Brücke, an der insbesondere eine Pinole mit relativ zur Brücke verfahrbarem Sensor montiert ist, Gelenkarmgeräte und Geräte mit einer Hexapodenmechanik. Ferner fallen darunter Geräte, dessen zumindest einer Sensor bezüglich zumindest einem Freiheitsgrad der Relativbewegung von Sensor und Messobjekt fest positioniert ist und bei denen das zu vermessende Werkstück relativ zu dem zumindest einen Sensor beweglich ist, wie z. B. bei einem Gerät mit beweglichem Messtisch. Auch sind von dem Begriff Koordinatenmessgerät Maschinen erfasst, die zwar nicht primär als Koordinatenmessgeräte konzipiert sind, die aber so eingerichtet sind, wie ein Koordinatenmessgerät zu arbeiten. Insbesondere weisen diese Maschinen zumindest einen Messsensor auf, der für die Ermittlung der Koordinaten genutzt wird. Bekannt sind beispielsweise Roboter, zum Beispiel Gelenkarm-Roboter, an denen anstelle eines Werkzeugs oder zusätzlich zu einem Werkzeug ein Sensor zur Erfassung der Werkstückoberfläche (beispielsweise ein Streifenprojektionssensor) befestigt ist, oder Werkzeugmaschinen, an denen anstelle eines Bearbeitungswerkzeugs oder zusätzlich zu einem Bearbeitungswerkzeug ein Messsensor (beispielsweise ein taktiler Sensor) befestigt ist. Auch sind beispielsweise Hexapodenmechaniken bekannt, an denen anstelle eines Bearbeitungswerkzeuges ein Sensor zur Erfassung der Werkstückoberfläche (beispielsweise ein taktiler Sensor) befestigt ist.

Auch personengeführte (zum Beispiel handgeführte) Sensoren zur Erfassung eines Werkstücks sind bekannt, wobei der zumindest eine Sensor optional an einer beweglichen Mechanik angeordnet ist. In diesem Fall fehlt ein motorischer Antrieb für die Erzeugung der Bewegung des Sensors. Stattdessen wird die Bewegung durch eine Person bewirkt. Sowohl eine scannende Erfassung des Messobjekts als auch eine Erfassung jeweils aus einer festen Position bei fester Ausrichtung des Sensors ist möglich. Bei personengeführten Sensoren wird vielfach das Triangulationsprinzip angewandt: zum Beispiel wird ein bekanntes Muster auf das Messobjekt projiziert und wird unter einem anderen Blickwinkel auf die Oberfläche zumindest ein Bild des Messobjekts aufgenommen. Statt der Projektion eines Musters kann bei der Anwendung des Triangulationsprinzips auch Laserstrahlung verwendet werden. Insbesondere der Ort des Empfangs der reflektierten Laserstrahlung enthält eine Information über Oberflächenkoordinaten des Messobjekts. Es sind jedoch auch Geräte mit einem personengeführten Sensor bekannt, die zumindest einen Motor zur Unterstützung der Bewegung und/oder der Positionierung des Sensors aufweisen.

Auch bezüglich der Arten von Sensoren, die von einem Koordinatenmessgerät zur Ermittlung der Koordinaten verwendet werden, ist die Erfindung nicht beschränkt. Es wurden bereits taktile Sensoren als Beispiel erwähnt, bei denen es sich zum Beispiel um solche vom schaltenden Typ oder vom messenden Typ handeln kann. Bei den taktilen Sensoren kann es sich insbesondere um passive oder aktive Sensoren handeln. Aktive Sensoren können ausgestaltet sein, eine Antastkraft zu erzeugen, mit der ein taktiler Taster eine Oberfläche eines zu vermessenden Werkstücks antastet. Häufig werden alternativ oder zusätzlich optische Sensoren eingesetzt, z. B. beispielsweise ein Projektionssensor, insbesondere ein Streifenprojektionssensor, ein Laser-Triangulationssensor, eine Zeilenkamera, eine Kamera zur Erfassung zweidimensionaler Bilder, eine Kamera zur Erfassung dreidimensionaler Bilder, eine Anordnung mit zumindest zwei Kameras oder ein konfokaler, chromatischer Sensor. Ferner gibt es zum Beispiel kapazitive Sensoren und induktive Sensoren.

Unter den Begriff Koordinatenmessgerät fallen daher auch 3D-Scanner. Hier sind wie oben erwähnt, aber nicht auf personengeführte Sensoren beschränkt, zum Beispiel triangulationsbasierte Systeme, wie Laserscanner und Projektionssensoren besonders vorteilhaft, da diese in kurzer Zeit viele Messpunkte mit ihren 3D-Koordinaten erzeugen können. Projektionssensoren projizieren ein flächenhaftes Muster, z.B. Streifenmuster, auf das Messobjekt und nehmen Bilder des Messobjektes mitsamt dem projizierten Muster mit mindestens einer Bildaufnahmeeinheit (Kamera) auf. Durch Auswertung der Bildaufnahmen können die 3D-Koordinaten von Oberflächenpunkten des Messobjektes bestimmt werden. Um ein Messobjekt bzw. die Messobjektoberfläche vollständig zu erfassen, genügt oft nicht nur eine Messposition, so dass die Relativposition vom 3D-Scanner zum Messobjekt meist mehrfach verändert wird. Diese Positionierung kann dabei manuell (handgehalten) erfolgen, oder auch halb-automatisiert oder automatisiert zum Beispiel durch Führen des 3D-Scanners mit einem Roboter. Auch oder zusätzlich kann die Positionsänderung durch eine Bewegung des Objektes relativ zum 3D-Scanner, zum Beispiel durch einen Drehtisch, realisiert werden.

Es ist bekannt, für Messpunkte, die durch die Vermessung eines Werkstücks durch ein Koordinatenmessgerät gewonnen wurden und für die daher Koordinaten der Messpunkte in einem Mess-Koordinatensystem vorliegen, jeweils die Abweichung der Position eines Messpunktes zu einer Sollposition zu ermitteln. Ferner ist es bekannt, eine solche Sollabweichung für eine Menge der Messpunkte zu ermitteln und denjenigen Messpunkt mit der größten Sollabweichung (absolutes Maximum) und/oder denjenigen Messpunkt mit der kleinsten Sollabweichung (absolutes Minimum) zu ermitteln. In dem Datensatz der Messpunkte kann daher nicht nur die Information über die jeweilige Sollabweichung, sondern auch die Information über das Maximum und/oder Minimum ergänzt werden.

Insbesondere kann eine solche Vorgehensweise bei Ausführung der vorliegenden Erfindung wie unten im Detail beschrieben ergänzt werden, d. h. es kann ebenfalls ein Datensatz der Messpunkte durch Zusatzinformation über Sollabweichungen ergänzt werden und/oder es kann abhängig von der gewonnenen Zusatzinformation automatisch zumindest eine Maßnahme ergriffen (zum Beispiel mit der Umsetzung der Maßnahme begonnen werden oder die Maßnahme vorgeschlagen) werden, wie zum Beispiel eine erneute Vermessung des Werkstücks. Auf weitere mögliche Maßnahmen wird noch eingegangen.

Mit der Identifizierung des Maximums und/oder Minimums der Sollabweichung liegt Zusatzinformation vor, die eine Beurteilung ermöglicht, ob das Werkstück und/oder seine Vermessung akzeptabel ist/sind. Allerdings kann es vorkommen, dass das Maximum und/oder Minimum (d. h. der Messpunkt, dem das Maximum und/oder das Minimum zugeordnet ist) in einem bestimmten lokalen Bereich liegt, jedoch ein anderer lokaler Bereich eine wertvollere Information über die Sollabweichung enthält. Zum Beispiel treten in vielen Fällen große Sollabweichungen an Kanten eines Werkstücks auf. Von Interesse ist jedoch häufig, ob das Werkstück im Verlauf von an den Kanten beginnenden bzw. endenden Oberflächen den Erwartungen entspricht.

US 2011/0087358 A1 beschreibt ein Verfahren zum Verarbeiten von Oberflächendaten für die Herstellung eines zu einem Basisteil passenden Teils. Messdaten des Basisteils werden zunächst vorgeglättet. Dann werden von Erhebungen der vorgeglätteten Oberfläche dimensionale Versätze gebildet und eine finale Glättungsoperation durchgeführt. Daten der durch die finale Glättungsoperation erhaltenen Oberfläche werden dazu verwendet, das passende Teil zu fertigen.

CN 109 635 518 A beschreibt ein Verfahren zum Auswerten des Oberflächenprofils eines Teils basierend auf der Vermessung durch ein Koordinatenmessgerät. Die Abweichung zwischen den Messpunkten und der Oberfläche des Teils gemäß einem Design wird berechnet und eine Abweichungskurve wird erhalten. Unter Verwendung von Wavelets wird die Abweichungskurve verarbeitet und zerlegt in eine Gesamt-Abweichungskurve, eine lokale Abweichungskurve und eine individuelle Abweichungskurve. Es werden alle Peaks und Täler der lokalen Abweichungskurve identifiziert. Es werden Schlüsselintervalle gleicher Größe auf der Abszisse gebildet. In einem sogenannten kritischen Intervall werden ein maximaler Peak-Wert und ein minimaler Peak-Wert ermittelt und in einen Satz von Schlüsselpunkten übernommen. Ein Verfahren der Oberflächen-Segmentierung wird dazu verwendet, die Abweichung zwischen den Positionen der Schlüsselpunkte und der Oberfläche des Designs des Messgegenstandes zu bestimmen.

Es ist eine Aufgabe der vorliegenden Erfindung, ein Verfahren zum Auswerten von Messdaten aus der Vermessung eines Werkstücks durch zumindest ein Koordinatenmessgerät anzugeben, das die Möglichkeiten der Analyse, ob das Werkstück und/oder seine Vermessung zumindest einer vorgegebenen Spezifikation entspricht, verbessert.

Die beigefügten Patentansprüche definieren den Schutzumfang.

Es wird vorgeschlagen, für die Menge der Messpunkte eine Mehrzahl der Minima und/oder eine Mehrzahl der Maxima der Sollabweichung zu ermitteln, sodass lokale Minima und/oder lokale Maxima erhalten werden. Die lokalen Maxima und/oder lokalen Minima liegen jeweils in einem ihnen zugeordneten lokalen Bereich. Insbesondere werden für einen örtlichen Bereich, in dem Messpunkte der Menge liegen, oder für die Gesamtheit der Messpunkte alle lokalen Extrema (d. h. in einem Fall die Maxima, in einem anderen Fall lediglich die Minima und in noch einem anderen Fall die Maxima und Minima) ermittelt. Bei der Menge der Messpunkte kann es sich um eine Punktwolke handeln, bei der alle Messpunkte einen Abstand zu den jeweils benachbarten Messpunkten haben. Dabei kann der Abstand zwischen benachbarten Messpunkten stark variieren oder in einem anderen Fall zumindest ungefähr konstant sein. Alternativ kann es sich bei der Menge der Messpunkte um eine Menge handeln, die alle Punkte zumindest einer eindimensionalen und/oder mehrdimensionalen geometrischen Struktur enthält, zum Beispiel alle Punkte einer (optional auch gekrümmten) Linie oder Fläche oder eines definierten Volumens. Zur Beschreibung solcher geometrischen Strukturen eignen sich bekanntermaßen Vektoren oder Splines. Wenn die Menge der Messpunkte alle Punkte einer eindimensionalen Struktur und/oder einer mehrdimensionalen Struktur aufweist, dann wird jedoch die Bestimmung der Sollabweichung vorzugsweise punktweise lediglich für einen Teil der Messpunkte der Struktur durchgeführt. Allerdings ist es auch nicht ausgeschlossen, dass für die gesamte Struktur oder zum Beispiel jeweils Abschnitte der Struktur eine Sollabweichung bestimmt wird.

Die Bestimmung der Extrema kann davon abhängen, wie groß der jeweilige Teilbereich ist, in dem ein Extremum der Sollabweichung vorliegt. Darauf wird noch näher eingegangen. Zum Beispiel ist es in der Regel nicht sinnvoll, wenn für die Sollabweichung eines einzelnen Messpunktes geprüft wird, ob es sich um ein Extremum handelt, und dabei lediglich die nächsten Nachbarn des Messpunktes berücksichtigt werden. In diesem Fall würde für eine sehr hohe Anzahl von Messpunkten festgestellt, dass es sich um ein Extremum handelt. Wenn daher für einen örtlichen Bereich der Menge der Messpunkte oder für alle Messpunkte der Menge alle lokalen Extrema ermittelt werden, dann setzt dies die Befolgung einer Definition voraus, unter welcher Voraussetzung oder Voraussetzungen eine in der Umgebung eines Messpunktes oder in der Umgebung einer Teilmenge von Messpunkten vorliegende hohe oder niedrige Sollabweichung als Extremum aufgefasst werden kann. Eine fachkundige Person ist dazu in der Lage, eine sinnvolle Definition der Voraussetzung oder Voraussetzungen zu wählen oder festzulegen. An dieser Stelle wird daher nicht näher darauf eingegangen. Im weiteren Verlauf der Beschreibung werden jedoch konkrete Ausgestaltungen und Weiterbildungen beschrieben.

Die Bestimmung lokaler Extrema hat den Vorteil, dass für die einzelnen lokalen Bereiche dieser Extrema ermittelt werden kann, wie groß die Sollabweichung ist. Insbesondere ist ein Extremum der Sollabweichung ein Maß für die Güte des Prozesses zur Herstellung des Werkstücks.

Wie erwähnt wird eine Menge von Messpunkten durch Vermessung eines Werkstücks durch zumindest ein Koordinatenmessgerät erhalten. Wenn eine Abweichung der Position eines Messpunkts oder eine Abweichung der Position einer geometrischen Struktur aus einer Vielzahl von Messpunkten zu einer Sollposition ermittelt werden soll, erfordert dies nicht nur eine eindeutige geometrische Beziehung (bezüglich der Position und Ausrichtung) der Koordinatensysteme der Menge von Messpunkten und der Information über die Sollposition, sondern auch die eindeutige Identifikation, welche Messposition mit welcher Sollposition zu vergleichen ist. In der Regel, auch wenn die Erfindung nicht auf diesen Fall beschränkt ist, ist daher die Sollposition eines Messpunkts die Position eines konkreten Oberflächenpunktes einer Oberfläche der Sollgeometrie des Werkstücks. Der konkrete Oberflächenpunkt ist in der Regel der dem Messpunkt nächstliegende Oberflächenpunkt der Oberfläche. Abhängig von der Geometrie des Werkstücks und der Lage des Messpunktes ist es beispielsweise aber auch möglich einen korrespondierenden Sollpunkt durch dessen gegenüber anderen Punkten ausgezeichnete Lage zu ermitteln. Zum Beispiel können der Messpunkt und der Sollpunkt jeweils der Mittelpunkt einer Bohrung in einer definierten Fläche sein. Bei der Oberfläche muss es sich nicht um eine Außenoberfläche oder eine Oberfläche zu einem Hohlraum oder Freiraum handeln, sondern es kann sich auch um eine Grenzfläche an einem Übergang zwischen verschiedenen Werkstoffen handeln. Insbesondere mittels der Computertomografie auf Basis einer Vermessung mit invasiver Messstrahlung kann Information über die Lage von solchen Grenzflächen gewonnen werden.

Die Sollgeometrie kann insbesondere durch CAD-Daten (Computer Aided Design-Daten) definiert sein. Dabei kommen alle möglichen Formate solcher Daten infrage. Zum Beispiel kann es sich um Punktwolken oder um Geometrie-Informationen handeln, die auf einer mathematisch-geometrischen Beschreibung mittels Vektoren basieren.

Die Erfindung ist jedoch nicht auf beschränkt, dass die Sollgeometrie, auf deren Basis die Positionsabweichung eines Messpunktes ermittelt wird, aus CAD-Daten stammt. Grundsätzlich ist es zum Beispiel auch möglich, dass die Einrichtung, welche die Abweichung zur Sollposition ermittelt, auf Papier dargestellte Geometrie-Informationen erfasst und daraus die Sollposition ermittelt.

Das Werkstück, welches durch zumindest ein Koordinatenmessgerät vermessen wird, kann optional Teil einer Anordnung von Werkstücken sein. Zum Beispiel können Werkstücke der Anordnung miteinander verbunden sein. Je nach Betrachtungsweise können miteinander verbundene Werkstücke auch als ein Werkstück aufgefasst werden. Jedenfalls betrifft die Erfindung auch Messdaten aus der Vermessung einer Anordnung von Werkstücken durch zumindest ein Koordinatenmessgerät. Wenn im Folgenden von der Menge von Messpunkten die Rede ist, die durch die Vermessung des Werkstücks erhalten werden, schließt dies auch Fälle mit ein, deren Messpunkte aus der Vermessung einer Mehrzahl von Werkstücken resultieren. Insbesondere kann sich ein interessierender örtlicher Bereich, in dem sich eine Teilmenge der Messpunkte befindet, zum Beispiel Oberflächenbereiche einer Mehrzahl von Werkstücken enthalten.

Patentanspruch 1 bezieht sich auf: Ein Verfahren zum Auswerten von Messdaten aus der Vermessung eines Werkstücks durch zumindest ein Koordinatenmessgerät, wobei
- für Messpunkte einer Menge von Messpunkten, die durch aus der Vermessung des Werkstücks erhaltene Koordinaten bestimmt sind, jeweils eine Abweichung zu einer Sollposition ermittelt wird,
- für die Menge der Messpunkte ein Minimum und/oder ein Maximum der Abweichung ermittelt wird und
- abhängig von dem Minimum und/oder dem Maximum zumindest eine der folgenden Maßnahmen ergriffen wird:
   a) ein Prozess der Herstellung des vermessenen Werkstücks und typgleicher Werkstücke wird verändert,
   b) das vermessene Werkstück und/oder ein in einem gleichartigen Prozess wie das vermessene Werkstück hergestelltes Werkstück wird nachbearbeitet,
   c) es wird ermittelt, ob eine während der Vermessung auf das vermessene Werkstück einwirkende Last zu einer akzeptablen oder inakzeptablen Verformung geführt hat,
   d) eine Vermessung des Werkstücks wird wiederholt und/oder verfeinert,
   e) es wird ermittelt, ob ein bei der Herstellung des vermessenen Werkstücks verwendetes Werkzeug zur Herstellung von Werkstücken desselben Typs weiter verwendet wird.

Für die Menge der Messpunkte wird eine Mehrzahl der Minima und/oder eine Mehrzahl der Maxima der Abweichung ermittelt und somit werden lokale Minima und/oder lokale Maxima erhalten. Anders ausgedrückt wird für die Menge der Messpunkte eine Mehrzahl von lokalen Minima und/oder eine Mehrzahl von lokalen Maxima der Abweichung ermittelt. Ferner wird zumindest eine der oben genannten Maßnahmen a) bis e) abhängig von zumindest einem der lokalen Minima und/oder einem der lokalen Maxima ergriffen.

Insbesondere kann das Verfahren die Vermessung des Werkstücks durch zumindest ein Koordinatenmessgerät und die Erzeugung der auszuwertenden Messdaten einschließen.

Oben wurde bereits erwähnt, dass die lokalen Maxima und/oder die lokalen Minima jeweils für einen lokalen Bereich ermittelt werden können. In dem jeweiligen lokalen Bereich ist das lokale Maximum ein absolutes Maximum bzw. ist das lokale Minimum ein absolutes Minimum. Bei der Festlegung der lokalen Bereiche gibt es zahlreiche Möglichkeiten, auf die im Folgenden eingegangen wird.

Allgemein formuliert werden oder sind lokale Bereiche festgelegt, in denen ein lokales Extremum, nämlich eines der lokalen Maxima oder eines der lokalen Minima, ermittelt wird. Die lokalen Bereiche sind Teile eines Gesamtbereichs der Menge von Messpunkten. Anders ausgedrückt befinden sich in dem Gesamtbereich alle Positionen der für das Werkstück ermittelten Messpunkte. Ein Extremum in Bezug auf den Gesamtbereich kann auch als absolutes Extremum bezeichnet werden, im Gegensatz zu einem lokalen Extremum, das lediglich in Bezug auf den ihm zugeordneten lokalen Bereich ein absolutes Extremum ist. Der Gesamtbereich kann insbesondere durch die Menge der lokalen Bereiche definiert sein. Die Festlegung der lokalen Bereiche kann vorab vorgenommen werden. Sie kann sich alternativ oder zusätzlich bei der Auswertung der Messpunkte hinsichtlich ihrer Sollabweichungen ergeben. Zum Beispiel kann jeder der Messpunkte, für den ermittelt wird, ob die für ihn bestimmte und somit ihm zugeordnete Sollabweichung ein Extremum bildet, wie im Folgenden beschrieben im Zentrum eines der lokalen Bereiche liegen. In diesem Fall folgt daher die Lage des jeweiligen lokalen Bereichs aus der Position des Messpunktes. Wie noch näher beschrieben wird, kann außerdem die Größe des lokalen Bereichs festgelegt sein oder ermittelt werden.

Gemäß einer möglichen Ausgestaltung überlappen sich die lokalen Bereiche. Gemäß einer möglichen Weiterbildung ist für insbesondere jeden Messpunkt ein lokaler Bereich definiert, in dessen Zentrum die Position des jeweiligen Messpunkts liegt. Der lokale Bereich bildet daher eine Umgebung des Messpunktes. Zum Beispiel werden für jeden Messpunkt die Sollabweichungen in seiner Umgebung gebildet und es wird das lokale Extremum in dieser Umgebung ermittelt.

Dabei kann es vorkommen, dass ein in einer ersten der Umgebungen liegendes erstes lokales Extremum, in zumindest einer anderen der Umgebungen kein lokales Extremum bildet, weil in dieser anderen Umgebung eine noch größere bzw. noch kleinere Sollabweichung existiert. Optional kann geprüft werden, ob ein solches erstes lokales Extremum oder eine Mehrzahl solcher ersten lokalen Extrema vorhanden ist und kann dieses erste lokale Extremum bzw. können diese ersten lokalen Extrema als nicht oder nur beschränkt für die Weiterverarbeitung infrage kommende Extrema gekennzeichnet werden oder als Extrema gelöscht werden. Zum Beispiel kann in einem Datensatz ein Feld jeweils für einen Messpunkt bezeichnen, ob es sich um ein lokales Extremum handelt oder nicht. In diesem Feld kann für eines der genannten ersten lokalen Extrema vermerkt werden, dass es sich nicht um ein lokales Extremum handelt. Die hier beschriebene Vorgehensweise bedeutet nicht, dass lediglich ein einziges Maximum und/oder ein einziges Minimum übrigbleibt. Vielmehr wird durch die hier beschriebene Vorgehensweise lediglich die räumliche Dichte der lokalen Extrema verringert. Dies kann die Entscheidungsgrundlage für die Ausführung einer der oben erwähnten Maßnahmen verbessern. Es gibt jedoch auch Fälle, in denen es vorteilhaft ist, die genannten ersten lokalen Extrema nicht zu eliminieren, sondern sie für die Entscheidung über die Ausführung der Maßnahme oder Maßnahmen zu berücksichtigen. Insbesondere wenn an einer Kante eines Werkstücks hohe Sollabweichungen zu erwarten sind, dann ist es von Vorteil, kleinere lokale Maxima auch in der Nähe der Kante zu berücksichtigen.

Bei einer anderen Ausgestaltung überlappen sich die lokalen Bereiche nicht. Zum Beispiel können die lokalen Bereiche in der Art von Kacheln den Gesamtbereich der Menge von Messpunkten in aneinander angrenzende örtliche Teilbereiche aufteilen. Auch dies ermöglicht es, für die Entscheidung über die abhängig davon auszuführenden Maßnahmen sinnvolle lokale Extrema zu ermitteln.

In jedem Fall hat die Größe der lokalen Bereiche einen Einfluss auf die Ermittlung lokaler Extrema in einer für die zu ergreifende(n) Maßnahme(n) sinnvollen Weise. Die Größe der lokalen Bereiche kann fest vorgegeben sein. Die Größe der lokalen Bereiche kann beispielsweise durch einen Radius um jeweils eine zugeordnete Position (wie zum Beispiel die Position des jeweiligen Messpunktes) oder im Fall eines lokalen Bereichs mit Ecken an dessen Außengrenzen durch zumindest eine Länge des lokalen Bereichs definiert sein/werden.

Bei einer alternativen Ausgestaltung des Verfahrens werden die lokalen Extrema zunächst für eine erste vorgegebene Größe der lokalen Bereiche ermittelt. Danach werden die ermittelten lokalen Extrema ausgewertet und es wird ermittelt, ob die erste vorgegebene Größe zu akzeptablen Ergebnissen insbesondere bezüglich der Entscheidung über die Ausführung zumindest einer der zuvor genannten Maßnahmen geführt hat. Hierzu ist/wird ein vorgegebenes Kriterium definiert, anhand dessen beurteilt wird, ob die Ergebnisse akzeptabel sind oder nicht. Wenn die Ergebnisse nicht akzeptabel sind, wird die Größe der lokalen Bereiche verändert und es werden jedenfalls in Bezug auf die lokalen Bereiche mit veränderter Größe erneut lokale Extrema ermittelt. Wenn die Größe der lokalen Bereiche vergrößert worden ist, können optional lediglich lokale Extrema eliminiert werden, falls in dem jeweiligen vergrößerten lokalen Bereich nun mehr als eines der bereits ermittelten lokalen Extrema liegt. Es bleibt dann in dem jeweiligen lokalen Bereich nur dasjenige lokale Extremum mit der (im Fall der Betrachtung von Maxima) größten Sollabweichung oder (im Fall der Betrachtung von Minima) kleinsten Sollabweichung übrig.

Allgemeiner formuliert wird bei dieser Ausgestaltung anhand eines vorgegebenen Kriteriums ermittelt, ob Ergebnisse einer Ermittlung der lokalen Minima und/oder Maxima akzeptabel sind oder nicht, wobei die Größe der lokalen Bereiche zumindest in Bezug auf eine Mehrzahl der lokalen Bereiche verändert wird, wenn die Ermittlung der lokalen Minima und/oder Maxima nicht akzeptabel ist, wobei zumindest in Bezug auf die lokalen Bereiche, deren Größe verändert worden ist, eine Mehrzahl von lokalen Minima und/oder eine Mehrzahl von lokalen Maxima der Abweichung ermittelt wird und wobei zumindest eine der oben genannten Maßnahmen a) bis e) abhängig von zumindest einem dieser Mehrzahl der lokalen Minima und/oder abhängig von zumindest einem dieser Mehrzahl der lokalen Maxima ergriffen wird.

Ferner alternativ oder zusätzlich kann die Größe der lokalen Bereiche von zumindest einer Abmessung des Werkstücks abhängig festgelegt sein/werden. Dies stellt insbesondere auch eine mögliche Variante zu der fest vorgegebenen Größe der lokalen Bereiche dar. Insbesondere ist die Größe der lokalen Bereiche umso größer, je größer die zumindest eine Abmessung des Werkstücks ist.

Ferner alternativ oder zusätzlich kann die Größe der lokalen Bereiche von der Menge der Messpunkte und insbesondere von der Punktdichte der Messpunkte abhängig festgelegt sein/werden. Dies stellt insbesondere auch eine mögliche Variante zu der fest vorgegebenen Größe der lokalen Bereiche dar. Insbesondere ist die Größe der lokalen Bereiche umso größer, je größer die Punktdichte der Messpunkte ist.

Ferner alternativ oder zusätzlich kann die Größe der lokalen Bereiche von der zulässigen Toleranz der Sollabweichung abhängig festgelegt sein/werden. Dies stellt insbesondere ebenfalls eine mögliche Variante zu der fest vorgegebenen Größe der lokalen Bereiche dar. Insbesondere ist die Größe der lokalen Bereiche umso größer, je größer die zulässige Toleranz ist.

Wenn hier von der Größe der lokalen Bereiche gesprochen wird, dann kann es sich um eine einheitliche Größe handeln, d. h. jeder der lokalen Bereiche ist gleich groß. Alternativ kann die Größe auch von dem jeweiligen lokalen Bereich abhängen. Zum Beispiel können für Zonen des Werkstücks unterschiedliche Verhältnisse der Größen der lokalen Bereiche festgelegt sein. Dabei ist es insbesondere sinnvoll, wenn in Zonen, in denen sich Formmerkmale des Werkstücks mit kleineren Dimensionen als in anderen Zonen befinden, die Größe der lokalen Bereiche kleiner ist als in den anderen Zonen. Zum Beispiel sollte der zumindest eine lokale Bereich in einer Zone mit einer Bohrung kleiner sein als der zumindest eine lokale Bereich in einer Zone einer großflächigen ebenen Oberfläche. Festgelegt werden können Vorgaben zur Größe der lokalen Bereiche und/oder zum Größenverhältnis der lokalen Bereiche zum Beispiel in einem Prüfplan, der Informationen zur Vermessung des Werkstücks und zur Auswertung der erhaltenen Messdaten aufweist. Zum Beispiel kann zumindest ein lokaler Bereich (wie zum Beispiel ein lokaler Bereich an einer Bohrung) optional hinsichtlich seiner Größe unveränderlich festgelegt sein, während die Größe anderer lokaler Bereiche in der oben beschriebenen Weise variabel ist.

Die Größe der lokalen Bereiche kann insbesondere nach zumindest einer Ausführung des Schritts der Bestimmung der lokalen Extrema derart angepasst werden, dass in dem jeweiligen lokalen Bereich oder in zumindest einem der lokalen Bereiche eine vorgegebene Anzahl an Minima und/oder Maxima gefunden wird. Danach kann dann dasjenige Maximum mit dem größten Wert der Sollabweichung in dem lokalen Bereich als das für diesen Bereich gültige lokale Maximum ermittelt werden. Für die lokalen Minima gilt entsprechendes.

Eine weitere Möglichkeit der Anpassung der Größe der lokalen Bereiche ist folgendermaßen: Nach der Ausführung des Schritts der Ermittlung der lokalen Extrema wird geprüft, ob sich in einem lokalen Bereich ein Maximum mit einer Sollabweichung befindet, die einen vorgegebenen Mindestwert erreicht oder bei einer anderen Ausführungsform den Mindestwert überschreitet. Wenn dies nicht der Fall ist, wird der lokale Bereich vergrößert und es wird wieder geprüft, ob der vorgegebene Mindestwert erreicht ist bzw. überschritten ist. Diese Vorgehensweise wird wiederholt, bis der Bereich so groß ist, dass sich in ihm ein lokales Maximum mit dem vorgegebenen Mindestwert bzw. darüber befindet. Dabei kann es vorkommen, dass der lokale Bereich zumindest gleich groß wie der Gesamtbereich des Werkstücks wird, d.h. z. B. ist der lokale Bereich so groß wie die gesamte Oberfläche des Werkstücks. Ein mögliches Ergebnis in diesem Fall ist, dass kein lokales Maximum mit der vorgegebenen Mindest-Sollabweichung existiert und das Werkstück daher den Spezifikationen entspricht. Vorzugsweise wird nicht nur ein lokaler Bereich auf diese Weise geprüft und gegebenenfalls vergrößert, sondern alle lokalen Bereiche, für die lokale Extrema ermittelt werden. Optional kann der Mindestwert abhängig von dem Wert des absoluten Maximums festgelegt werden. Je größer der Wert des absoluten Maximums ist, desto größer wird auch der Mindestwert vorgegeben. Selbstverständlich ist der Mindestwert kleiner als der Wert des Maximums.

Alternativ oder zusätzlich kann nach der Ausführung des Schritts der Ermittlung der lokalen Extrema geprüft werden, ob sich in einem lokalen Bereich ein Minimum mit einer Sollabweichung befindet, die einen vorgegebenen Maximalwert erreicht oder bei einer anderen Ausführungsform den Maximalwert unterschreitet. Wenn dies nicht der Fall ist, wird der lokale Bereich vergrößert und es wird wieder geprüft, ob der vorgegebene Maximalwert erreicht ist bzw. unterschritten ist. Diese Vorgehensweise wird wiederholt, bis der Bereich so groß ist, dass sich in ihm ein lokales Minimum mit dem vorgegebenen Maximalwert bzw. darunter befindet. Dabei kann es vorkommen, dass der lokale Bereich zumindest gleich groß wie der Gesamtbereich des Werkstücks wird, d.h. z. B. ist der lokale Bereich so groß wie die gesamte Oberfläche des Werkstücks. Ein mögliches Ergebnis in diesem Fall ist, dass kein lokales Minimum unterhalb der vorgegebenen Maximal-Sollabweichung existiert und das Werkstück daher den Spezifikationen nicht entspricht. Vorzugsweise wird nicht nur ein lokaler Bereich auf diese Weise geprüft und gegebenenfalls vergrößert, sondern alle lokalen Bereiche, für die lokale Extrema ermittelt werden. Optional kann der Maximalwert abhängig von dem Wert des absoluten Minimums festgelegt werden. Je kleiner der Wert des absoluten Minimums ist, desto kleiner wird auch der Maximalwert vorgegeben. Selbstverständlich ist der Maximalwert größer als der Wert des Minimums.

Oben wurde bereits beschrieben, dass abhängig von zumindest einem der lokalen Minima und/oder einem der lokalen Maxima zumindest eine Maßnahme ergriffen wird. Insbesondere beziehen sich die Maßnahmen auf den Prozess der Herstellung des Werkstücks oder eines typgleichen Werkstücks und/oder auf die Vermessung des Werkstücks oder eines typgleichen Werkstücks.

Insbesondere kann ein Prozess der Herstellung des vermessenen Werkstücks und typgleicher Werkstücke verändert werden. Vor allem lokale Maxima, aber auch lokale Minima können hierfür Anhaltspunkte geben. Zum Beispiel kann eine Auswertungseinrichtung aus dem Vorhandensein von lokalen Minima den Schluss ziehen, dass eine Bearbeitung des Werkstoffs oder der Werkstoffe des Werkstücks in den zugeordneten lokalen Bereichen mit hoher Genauigkeit stattgefunden hat. Insbesondere wenn sich die Bearbeitung in diesen lokalen Bereichen von der Bearbeitung in anderen lokalen Bereichen unterschieden hat, kann die Bearbeitung in den anderen lokalen Bereichen in Zukunft verändert werden und in der Weise ausgeführt werden, wie sie in den lokalen Bereichen mit den lokalen Minima stattgefunden hat. Aus dem Vorhandensein eines lokalen Maximums und optional aus dem Überschreiten einer vorgegebenen zulässigen Abweichung zwischen gemessener Position des Messpunktes und seiner Sollposition kann eine Auswertungseinrichtung den Schluss ziehen, dass die Bearbeitung zukünftig herzustellender typgleicher Werkstücke in den zugeordneten lokalen Bereichen verändert werden muss. Die Möglichkeit für Veränderungen des Herstellungsprozesses sind zwar vielfältig, aber sie sind einer fachkundigen Person bekannt. Beispielsweise kann die Position eines Bearbeitungswerkzeugs korrigiert werden, etwa durch Kalibrierung. Gemäß einem weiteren Beispiel kann die Geschwindigkeit eines Vortriebs des Bearbeitungswerkzeugs verändert werden. Ein Spezialfall der Veränderung des Herstellungsprozesses besteht in der Ersetzung eines bei der Herstellung des vermessenen Werkstücks verwendeten Werkzeugs, zum Beispiel aufgrund einer Abnutzung des Werkzeugs. Gegebenenfalls kann daher aus den ermittelten lokalen Maxima und/oder lokalen Minima ermittelt werden, dass das Werkzeug zu ersetzen ist.

Insbesondere kann für die Ergreifung einer bestimmten Maßnahme vorab definiert sein, welchen Wertebereichen und/oder welcher örtlichen Verteilung der lokalen Maxima und/oder Minima sie entspricht. Zum Beispiel kann eine künstliche Intelligenz trainiert werden, aus den Wertebereichen und/oder aus der örtlichen Verteilung zu erkennen, welche Maßnahme zu ergreifen ist.

Gemäß einer weiteren Maßnahme wird das vermessene Werkstück und/oder ein in einem gleichartigen Prozess wie das vermessene Werkstück hergestelltes Werkstück nachbearbeitet. Den Grad der Nachbearbeitung, d.h. insbesondere wieviel Material in einzelnen lokalen Bereichen abzutragen ist, kann unmittelbar aus den festgestellten Sollabweichungen ermittelt werden, insbesondere aus den lokalen Maxima in den einzelnen örtlichen Bereichen.

Es kann ferner ermittelt werden, ob eine während der Vermessung auf das vermessene Werkstück einwirkende Last zu einer akzeptablen oder inakzeptablen Verformung geführt hat. Wenn zum Beispiel die Verformung inakzeptabel ist, d. h. eine zu starke Verformung stattgefunden hat, kann automatisch die Maßnahme ergriffen werden, dass die Vermessung des Werkstücks wiederholt wird und dann zum Beispiel das Werkstück in Bezug auf das Gravitationsfeld anders gelagert wird und/oder das Werkstück zusätzlich abgestützt oder gehalten wird, um die Verformung geringer zu halten.

Insbesondere wenn die Vermessung des Werkstücks mit geringer Punktdichte der Messpunkte stattgefunden hat und außerdem die ermittelten lokalen Maxima und/oder lokalen Minima erkennen lassen, dass die Punktdichte der Vermessung zu gering war, kann automatisch festgestellt werden, dass die Vermessung des Werkstücks wiederholt und/oder verfeinert wird.

Vorzugsweise wird das Werkstück an der Stelle zumindest eines der ermittelten lokalen Maxima erneut vermessen, insbesondere auch in einer Umgebung um die Stelle und zwar idealer Weise mit einer höheren Dichte der Messpunkte als zuvor. Dies hat den Vorteil, dass die Information über die lokal maximale Sollabweichung überprüft und ggf. verfeinert werden kann. Dies betrifft insbesondere den Fall der taktilen Abtastung der Oberfläche des Werkstücks. Es ist auch möglich, das Werkstück zunächst mit einer ersten Art von Sensoren (z. B. einem optischen Sensor wie zumindest eine Kamera) abzutasten. Nach der Auswertung der Messpunkte und Ermittlung der lokalen Extrema kann dann an der Stelle zumindest eines lokalen Extremums und vorzugsweise auch in der Umgebung der Stelle das Werkstück erneut vermessen werden und zwar alternativ oder zusätzlich mit einem Sensor eines anderen Typs (wie z. B. einem taktilen Sensor und/oder einem anderen optischen Sensor).

Gemäß einer anderen Ausgestaltung wird zum Beispiel ein in einem Spritzgussverfahren hergestelltes Werkstück vermessen und es werden die lokalen Extrema ermittelt. Insbesondere anhand der ermittelten Maxima wird zumindest ein Parameter (insbesondere Druck, Dauer und/oder Temperatur des Vorgangs) des Spritzgussverfahrens für die Herstellung typgleicher Werkstücke angepasst.

Auch können die lokalen Extrema gruppiert und/oder einander zugeordnet werden. Zum Beispiel wird für einen lokalen Bereich, in dessen Zentrum sich ein lokales Maximum befindet, diesem lokalen Maximum ein in demselben Bereich vorhandenes lokales Minimum zugeordnet. Umgekehrt kann für einen lokalen Bereich, in dessen Zentrum sich ein lokales Minimum befindet, diesem lokalen Minimum ein in demselben Bereich vorhandenes lokales Maximum zugeordnet werden. Auch hieraus lassen sich Schlüsse über das Treffen von Maßnahmen ziehen.

Ferner können die lokalen Extrema jeweils einer Kategorie (zum Beispiel Maximum oder Minimum) nach der Größe ihres Wertes sortiert und/oder geordnet werden. Zum Beispiel kann dann das lokale Maximum mit dem größten Wert zuerst berücksichtigt werden, um zu entscheiden, ob zumindest eine Maßnahme ergriffen wird. Selbstverständlich kann ein lokales Maximum (zum Beispiel ein an einer Kante des Werkstücks auftretendes lokales Maximum) auch nicht berücksichtigt bleiben. Von den berücksichtigten lokalen Maxima kann jeweils das mit dem größeren Wert (Betrag) zuerst oder vorrangig berücksichtigt werden und/oder bei der Prüfung der Einleitung zumindest einer Maßnahme höher gewichtet werden als zumindest ein anderes lokales Maximum mit einem kleineren Wert.

Bei dem Verfahren kann es sich insbesondere um ein teilweise computerimplementiertes Verfahren handeln. Insbesondere können die Ermittlung der Abweichung der Sollposition und die Ermittlung der Extrema sowie die Auswertung der um die Extrema erweiterten Messdaten mit dem Ziel der Entscheidung, welche Maßnahme oder Maßnahmen ergriffen wird/werden, computerimplementiert durchgeführt werden.

Daher kann insbesondere die im Folgenden beschriebene Vorrichtung zur Durchführung des Verfahrens ein Computerprogramm aufweisen, welches die zugeordneten Verfahrensschritte durchführt, wenn das Computerprogramm auf einem Computer oder einer Anordnung von Computern ausgeführt wird.

Die Erfindung betrifft ferner eine Vorrichtung gemäß Anspruch 9.

Die Extremumsermittlungseinrichtung ist ausgestaltet, für die Menge der Messpunkte eine Mehrzahl von lokalen Minima und/oder eine Mehrzahl von lokalen Maxima der Abweichung zu ermitteln, und die Maßnahmeneinrichtung ist ausgestaltet, zumindest eine der oben genannten Maßnahmen a) bis e) abhängig von zumindest einem der lokalen Minima und/oder einem der lokalen Maxima auszulösen.

Ausgestaltungen der Vorrichtung ergeben sich aus der Beschreibung von Ausgestaltungen des Verfahrens. So kann beispielsweise die Extremumsermittlungseinrichtung und/oder eine andere Einrichtung der Vorrichtung ausgestaltet sein, eine Größe der lokalen Bereiche festzulegen und/oder zu ermitteln.

Diejenigen Teile der Vorrichtung, die wie oben erwähnt computerimplementiert Verfahrensschritte ausführen, können zum Beispiel aus einem einzigen Computer oder einem Computernetz bestehen oder den Computer bzw. das Computernetz aufweisen.

Der Computer oder zumindest einer der Computer kann bezüglich seiner Arbeitsweise insbesondere ein Analogrechner, Digitalrechner und/oder ein Hybridrechner sein. Bezüglich seiner Größe und Bauart kann er ein Smartphone, ein Personal Digital Assistant (PDA), ein Tabletcomputer, ein eingebettetes System (z. B. in dem Steuerrechner eines Koordinatenmessgeräts eingebettet), ein Ein- oder Mehrplatinencomputer, ein Personal Computer (PC), ein Desktop-Computer, ein Arbeitsplatzrechner, ein in ein Computernetz eingebundener Hostrechner oder Server, ein Thin Client - Computer, ein Netbook, ein Notebook, ein Laptop, ein Mainframe-Computer oder ein Supercomputer sein, wobei manche der genannten Arten auch durch einen einzigen Computer realisiert werden können wie zum Beispiel ein PC mit mehreren Platinen. Ferner kann der Computer oder zumindest einer der Computer ein oder mehrere zentrale Verarbeitungseinheiten (CPU) und/oder pro CPU ein oder mehrere Rechenkerne aufweisen. Auch Grafikkarten oder auch andere dedizierte Karten mit Verarbeitungseinheiten, die Teil eines Computers sind, können ausschließlich oder in Kombination mit anderen Computern oder Verarbeitungseinheiten die Mittel zur Durchführung des Verfahrens darstellen.

Außerdem gehört zum Umfang der Erfindung ein Computerprogramm, aufweisend Befehle, die bei der Ausführung des Programms durch einen Computer oder eine Anordnung von Computern diesen/diese veranlassen, die computerimplementierten Teile des Verfahrens auszuführen, insbesondere in einer der beschriebenen Ausgestaltungen auszuführen.

Ferner ist darauf hinzuweisen, dass der Computer oder die Computer zwar vorzugsweise durch ein Computerprogramm zur Ausführung des Verfahrens veranlasst wird/werden, jedoch die Mittel zur Ausführung des Verfahrens zumindest auch eine durch Hardware realisierte, vorzugsweise programmierbare Anordnung (zum Beispiel eine Anordnung von Logik-Gattern) aufweisen können, wie beispielsweise ein ASIC (Application-Specific Integrated Circuit), ein PLD (Programmable Logic Device) oder ein FPGA (Field Programmable Gate Array).

Ferner gehört zum Umfang der Erfindung eine Anordnung mit der Vorrichtung, wobei die Anordnung ferner zumindest ein Koordinatenmessgerät aufweist, das ausgestaltet ist, die Vermessung des Werkstücks auszuführen und die auszuwertenden Messdaten zu erzeugen.

Ausführungsbeispiele der Erfindung werden nun unter Bezugnahme auf die beigefügte Zeichnung beschrieben. Die einzelnen Figuren der Zeichnung zeigen:
- Fig. 1: ein Koordinatenmessgerät, das lediglich im vorliegenden Ausführungsbeispiel ein klassisches Koordinatenmessgerät in Portalbauweise ist,
- Fig. 2: schematisch einen Rechner, der eine Abweichungsermittlungseinrichtung, eine Extremumsermittlungseinrichtung und eine Maßnahmeneinrichtung aufweist,
- Fig. 3: schematisch das in Fig. 1 dargestellte Koordinatenmessgerät im Datenaustausch mit einem weiteren Rechner,
- Fig. 4: schematisch ein Flussdiagramm zur Erläuterung von Schritten einer Ausführungsform des erfindungsgemäßen Verfahrens,
- Fig. 5: ein Diagramm mit Koordinaten von Messpunkten, wobei Abweichungen zu einer geplanten ebenen Oberfläche dargestellt sind und wobei der in Fig. 5 gesamte dargestellte Bereich drei lokale Bereiche unterteilt ist, und
- Fig. 6: ein Diagramm mit den Messpunkten wie in Fig. 5, wobei jedoch der gesamte dargestellte Bereich in fünf lokale Bereiche unterteilt ist.

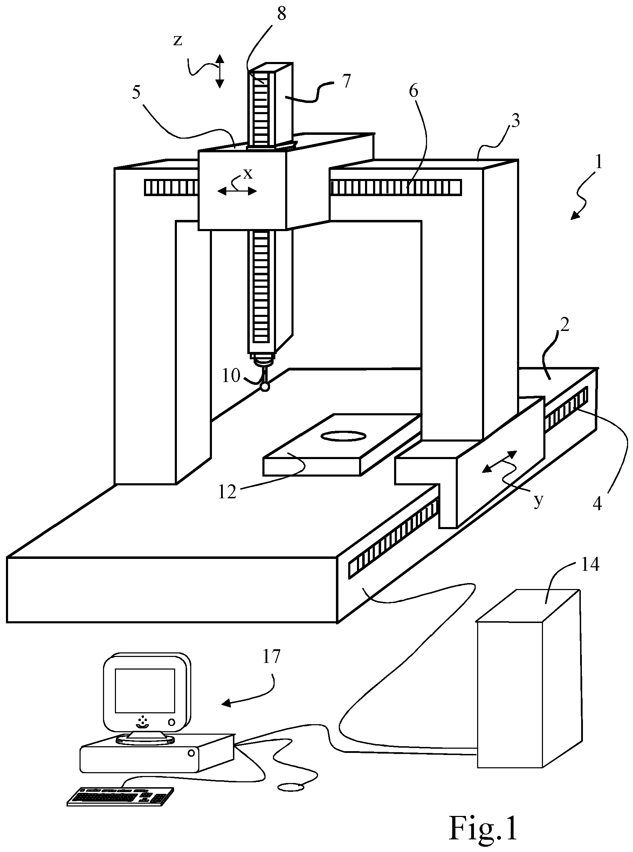

Fig.1 zeigt schematisch ein Koordinatenmessgerät 1 in Portalbauweise. Entlang von zwei parallelen Führungen im Bereich eines Messtisches 2 (z. B. eine Granitplatte) ist ein erster Schlitten 3 in Form eines Portals beweglich geführt. Zur Messung der Position des Portals entsprechend einer ersten linearen Bewegungsachse y ist ein erster Maßstab 4 vorgesehen. Die Position wird mit einem entsprechenden Ablesesensor (nicht dargestellt) abgelesen, wie auch bei weiteren Maßstäben, die im Folgenden beschrieben werden. Außerdem ist ein erster Antrieb (nicht dargestellt) vorgesehen, durch den eine Bewegung des ersten Schlittens 3 in y-Richtung angetrieben werden kann.

Entlang der den Messtisch 2 horizontal überspannenden Traverse des portalförmigen ersten Schlittens 3, ist ein zweiter Schlitten 5 beweglich geführt, wobei zur Messung von dessen Position relativ zu dem Portal entsprechend einer zweiten linearen Bewegungsachse x ein zweiter Maßstab 6 und ein entsprechender zweiter Ablesesensor (nicht dargestellt) vorgesehen sind. Eine Bewegung des zweiten Schlittens 5 in der x-Richtung kann durch einen zweiten Antrieb (nicht dargestellt) angetrieben werden.

An dem zweiten Schlitten 5 ist wiederum ein dritter Schlitten, nämlich eine Pinole 7, beweglich geführt, wobei zur Messung der Position der Pinole relativ zu dem zweiten Schlitten 5 entsprechend einer dritten linearen Bewegungsachse z ein dritter Maßstab 8 und ein entsprechender dritter Ablesesensor (nicht dargestellt) vorgesehen sind. Eine Bewegung der Pinole 7 in der z-Richtung kann durch einen dritten Antrieb angetrieben werden. Unterhalb des unteren Endes der Pinole 7 ist ein Messsensor 10 angeordnet, der im vorliegenden Fall in Form eines Taststiftes mit Tastkugel (d.h. als taktiler Sensor) ausgebildet ist, welcher z. B. über einen Messkopf und eine Wechselschnittstelle am unteren Ende der Pinole 7 befestigt ist.

Auf dem Messtisch 2 ist ein Werkstück 12 angeordnet, das durch Bewegung der drei Schlitten 3, 5, 7 vom Messsensor 10 abgetastet werden kann, wobei aus den Signalen des Messsensors 10 und/oder des Messkopfes sowie aus den Maßstabspositionen der Maßstäbe 4, 6, 8 Messwerte auf der Oberfläche des zu vermessenden Werkstückes 12 ermittelt werden. Eine Steuerung, implementiert durch ein auf einem Steuerrechner 14 ausgeführtes Computerprogramm steuert und/oder regelt die Antriebe der Schlitten 3, 5, 7. Mit der Steuerung kann ein Messrechner 17 verbunden sein, von dem die ausgelesenen Maßstabswerte der Maßstäbe 4, 6, 8, sowie die Signale des Messsensors 10 und/oder des Messkopfes empfangen und verarbeitet werden, um die Koordinaten der von dem Messsensor 10 vermessenden Messpunkte auf der Oberfläche des Werkstücks 12 zu erzeugen.

Insbesondere der in Fig. 1 dargestellte Messrechner 17, oder ein anderer Messrechner oder eine Anordnung von Messrechnern, kann eine Abweichungsermittlungseinrichtung aufweisen, die ausgestaltet ist, für Messpunkte einer Menge von Messpunkten, die durch aus der Vermessung des Werkstücks erhaltene Koordinaten bestimmt sind, jeweils eine Abweichung zu einer Sollposition zu ermitteln. Hierzu steht dem Rechner die Information über die jeweilige Sollposition zur Verfügung, zum Beispiel in Form von CAD-Planungsdaten des Werkstücks. Ferner kann der Rechner eine Extremumsermittlungseinrichtung aufweisen, die ausgestaltet ist, für die Menge der Messpunkte eine Mehrzahl von lokalen Minima und/oder eine Mehrzahl von lokalen Maxima der Abweichung zu ermitteln. Außerdem kann der Rechner oder eine andere Einrichtung eine Maßnahmeneinrichtung aufweisen, die ausgestaltet ist, zumindest eine Maßnahme abhängig von zumindest einem der lokalen Minima und/oder einem der lokalen Maxima auszulösen. Wie zum Beispiel oben beschrieben, kann die jeweilige Maßnahme den Prozess der Herstellung des vermessenden Werkstücks und/oder typgleicher Werkstücke betreffen und/oder kann die jeweilige Maßnahme die Vermessung des Werkstücks betreffen.

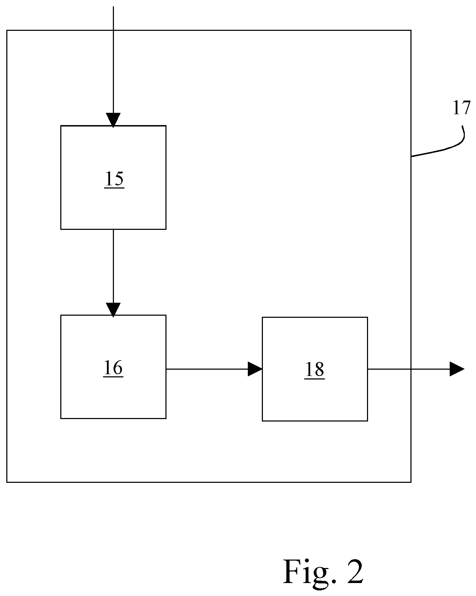

Fig. 2 zeigt schematisch einen Rechner, in dem Ausführungsbeispiel den in Fig. 1 dargestellten Rechner 17. Der Rechner weist eine Abweichungsermittlungseinrichtung 15 auf, die ausgestaltet ist, für Messpunkte einer Menge von Messpunkten, die durch aus der Vermessung des Werkstücks erhaltene Koordinaten bestimmt sind, jeweils eine Abweichung zu einer Sollposition ("Sollabweichung") zu ermitteln. Wie durch einen von oben auf die Abweichungsermittlungseinrichtung 15 weisenden Pfeil angedeutet ist, empfängt diese die hierfür erforderlichen Daten. Die Abweichungsermittlungseinrichtung 15 ist mit einer Extremumsermittlungseinrichtung 16 verbunden, die ausgestaltet ist, für die Menge der Messpunkte eine Mehrzahl von lokalen Minima und/oder eine Mehrzahl von lokalen Maxima der Sollabweichung zu ermitteln. Die Extremumsermittlungseinrichtung 16 wiederum ist mit einer Maßnahmeneinrichtung 18 verbunden, die ausgestaltet ist, zumindest eine Maßnahme abhängig von zumindest einem der lokalen Minima und/oder einem der lokalen Maxima auszulösen.

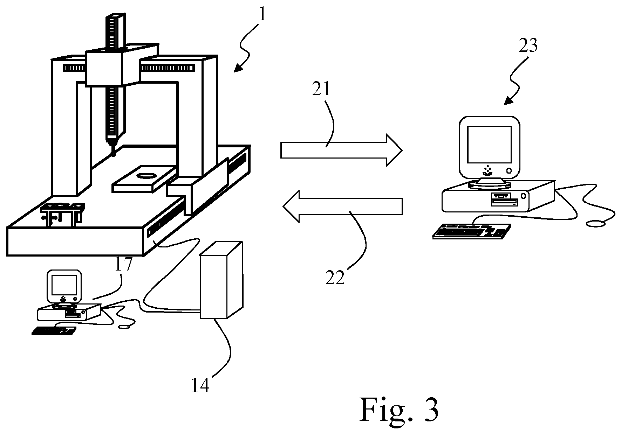

Das Ausführungsbeispiel der Fig. 3 zeigt, dass zusätzlich zu dem Messrechner 17 aus Fig. 1 und dem Steuerrechner 14 ein weiterer Rechner 23 vorgesehen sein kann, der die Maßnahmeneinrichtung aufweist und vorzugsweise auch die Abweichungsermittlungseinrichtung und die Extremumsermittlungseinrichtung aufweist. Wie durch Pfeile 21 und 22 angedeutet ist, empfängt der weitere Rechner 23 die für den Betrieb dieser Einrichtungen genannten Daten, einschließlich der Koordinaten der Messpunkte. Umgekehrt löst der weitere Rechner 23 in einem konkreten Ausführungsbeispiel abhängig von zumindest einem der lokalen Minima und/oder einem der lokalen Maxima eine Maßnahme aus, die die Vermessung des Werkstücks betrifft. Beispielsweise kann die Maßnahme darin bestehen, dass zumindest ein Teil der Oberfläche des Werkstücks nochmals (etwa mittels eines anderen Sensors) und/oder bei größerer Dichte der Messpunkte vermessen wird.

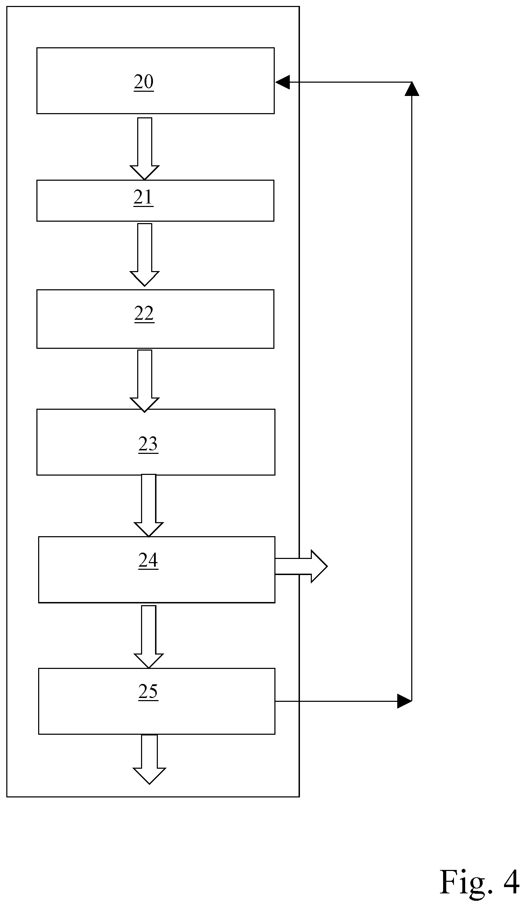

Anhand von Fig. 4 wird nun ein Ausführungsbeispiel des erfindungsgemäßen Verfahrens beschrieben. In einem ersten Schritt 20 wird ein Werkstück vermessen. In einem folgenden Schritt 21 werden Rohmessdaten aus der Vermessung des Werkstücks, insbesondere Daten über die Position des zumindest einen bei der Vermessung des Werkstücks verwendeten Messsensors und Sensordaten des Messsensors, ausgewertet und Koordinaten der bei der Vermessung des Werkstücks vermessenen Messpunkte erzeugt. In einem folgenden Schritt 22 wird für die Messpunkte jeweils eine Abweichung zu einer Sollposition ermittelt. In einem folgenden Schritt 23 werden für die Menge der Messpunkte lokale Minima und/oder lokale Maxima der Abweichung ermittelt. Das jeweilige lokale Extremum ist somit der Position des Messpunktes zugeordnet, für welchen die Abweichung das Extremum aufweist.

In einem optionalen folgenden Schritt 24 werden zumindest die Extrema gemeinsam mit der zugeordneten Position ausgegeben. Die ausgegebenen Daten sind in Fig. 4 durch einen nach rechts weisenden Pfeil dargestellt.

In einem auf Schritt 23 folgenden Schritt 25 wird anhand der lokalen Extrema der Abweichung ermittelt, ob und gegebenenfalls welche von mehreren möglichen Maßnahmen zu ergreifen ist. Die Aktion des Auslösens der Maßnahme und/oder des Steuerns der Maßnahme ist unten in Fig. 4 durch einen nach unten weisenden Pfeil angedeutet. Ferner ist durch eine von Schritt 25 zu dem ersten Schritt 20 führende Pfeilkette angedeutet, dass bei manchen Maßnahmen die Vermessung des Werkstücks zumindest teilweise wiederholt oder verändert wird.

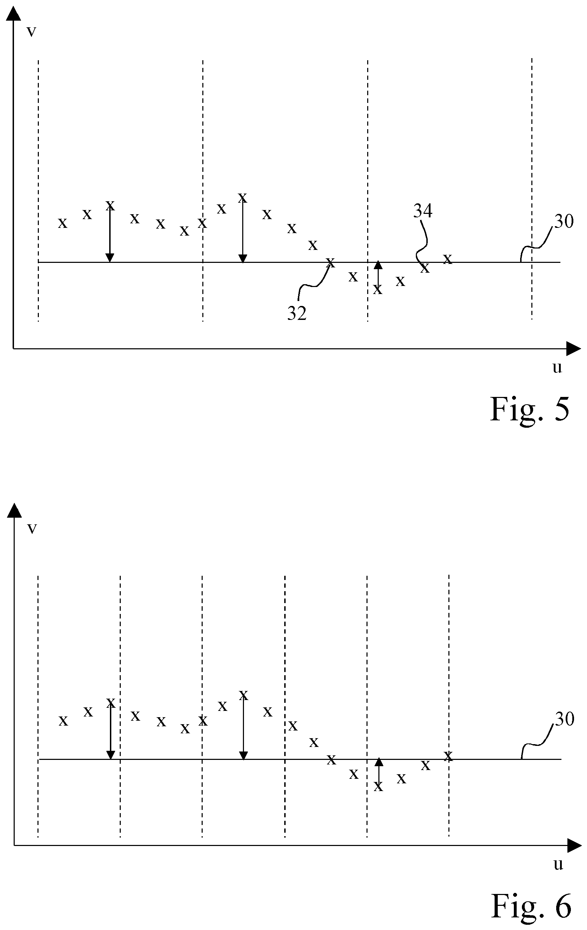

Fig. 5 zeigt schematisch ein Diagramm von Messpunkten, die jeweils durch ein Kreuz dargestellt sind. In dem Diagramm variiert entlang der horizontalen Achse die Position der Messpunkte in einer ersten Richtung u und variiert entlang der vertikalen Achse die Position der Messpunkte in einer zweiten Richtung v. Außerdem ist in dem Diagramm eine horizontale Linie 30 dargestellt, die die Oberfläche eines Werkstücks gemäß Planungsdaten andeutet. Der Sollzustand des Werkstücks in dem schematisch dargestellten Bereich ist es daher, dass alle Messpunkte auf der Oberfläche liegen und in der Darstellung der Fig. 5 daher die Messpunkte auf der Linie 30 liegen.

An drei Stellen des Diagramms ist die Abweichung zwischen dem jeweiligen Messpunkt von der Sollposition auf der Oberfläche dem Betrage nach maximal und es besteht daher ein lokales Maximum. An diesen Stellen weist jeweils ein Pfeil in vertikaler Richtung von dem Messpunkt zu der Linie 30. Generell gilt, dass ein Maximum der Sollabweichung vorzugsweise ein Maximum des Betrages der Sollabweichung ist, wobei die Information darüber, in welche Richtung der Messpunkt vom Sollpunkt abweicht, vorzugsweise gespeichert und/oder berücksichtigt wird. Alternativ können Maxima der Sollabweichung getrennt voneinander in zwei oder mehr als zwei Kategorien eingeteilt werden, wobei jede Kategorie die Abweichung in eine gegebene Richtung betrifft. Allerdings komme in der Praxis nicht nur Fälle vor, in denen die Oberfläche gemäß den Planungsdaten des Werkstücks in einer Ebene verläuft, sodass die Richtung der Abweichung grundsätzlich beliebig sein kann. Wie bereits erwähnt besteht vorzugsweise eine Vorschrift, wie für einen Messpunkt die Position des zugeordneten Sollpunktes ermittelt wird.

In Fig. 5 sind vier in vertikaler Richtung verlaufende gestrichene Linien dargestellt. Dadurch ist angedeutet, dass Bereiche hinsichtlich ihrer Größe in der Richtung u definiert sein können, wobei sich in jedem Bereich nur ein lokales Maximum befinden darf. Dies ist im Ausführungsbeispiel der Fig. 5 der Fall. Die Darstellung der Bereiche und ihrer Größe ist schematisch zu verstehen. Wie oben bereits beschrieben können die Bereiche gleitende Bereiche seien in dem Sinne, dass für jeden Messpunkt innerhalb eines Bereichs der definierten Größe geprüft wird, ob und wo sich ein lokales Maximum befindet. Wenn sich ein identifiziertes lokales Maximum des Bereichs am Rand des Bereichs befindet, kann es verworfen werden, d. h. nicht als lokales Maximum bestimmt werden, da anzunehmen ist, dass sich jenseits der Grenzen des betrachteten Bereichs eine Stelle mit noch größerer Sollabweichung befindet.

Fig. 6 zeigt dieselben Messpunkte wie in Fig. 5, wobei jedoch die Größe der betrachteten lokalen Bereiche halb so groß ist wie in Fig. 5. Es wird ersichtlich, dass sich in dem zweiten und vierten Bereich von links kein lokales Maximum befindet. In diesen beiden Bereichen ist die Sollabweichung jeweils am Rand des Bereichs am größten, weshalb dieser Wert verworfen wird. Aber auch zum Beispiel in dem ersten und fünften Bereich von links würde das tatsächlich dort bestehende lokale Maximum bei dieser Bereichsgröße nicht identifiziert werden, weil es jedenfalls so erscheint, dass die größte Sollabweichung am Rand des Bereichs besteht. Fig. 6 zeigt, dass die Größe der Bereiche zu klein gewählt ist.

Wenn dagegen nochmals Fig. 5 betrachtet wird und überlegt wird, welche lokalen Maxima bestimmt werden, falls die Größe der Bereiche doppelt so groß wie dargestellt gewählt wird, dann kann es sich je nach der zu beantwortenden Fragestellung, d. h. je nach dem vorgegebenen Kriterium für die Ermittlung, ob die Größe der lokalen Bereiche akzeptabel ist oder nicht, um eine zu große Wahl der Bereiche handeln oder die Bereiche können eine akzeptable Größe haben. Konkret würde bei doppelter Größe im Vergleich zu der Darstellung in Fig. 5 lediglich das zweite lokale Maximum von links als gültiges Maximum verbleiben. Insbesondere wenn die Oberfläche des Werkstücks in der ersten Richtung u sehr viel größer ist als der schematisch in Fig. 5 dargestellte Abschnitt, dann kann die doppelte Größe der lokalen Bereiche sinnvoll sein. Dies würde mit großer Wahrscheinlichkeit zur Identifizierung einer weiteren Anzahl von lokalen Maxima führen.

Für lokale Minima kann entsprechend vorgegangen werden. Zum Beispiel würden bei der in Fig. 5 dargestellten Bereichsgröße zwei lokale Minima identifiziert, oder bei der oben erwähnten gleitenden Anwendung der Bereiche lediglich ein lokales Minimum identifiziert, wo sich der Messpunkt mit dem Bezugszeichen 32 befindet. Der Messpunkt mit dem Bezugszeichen 34 würde sich innerhalb desselben lokalen Bereichs wie der Messpunkt mit dem Bezugszeichen 32 befinden und daher als lokales Minimum ausscheiden, denn der Abstand der Messpunkte 32, 34 ist kleiner als die dargestellte Breite der lokalen Bereiche.

## Patentansprüche

1. Verfahren zum Auswerten von Messdaten aus der Vermessung eines Werkstücks (12) durch zumindest ein Koordinatenmessgerät (1), wobei
- für Messpunkte einer Menge von Messpunkten, die durch aus der Vermessung des Werkstücks (12) erhaltene Koordinaten bestimmt sind, jeweils eine Abweichung einer Position des Messpunktes zu einer Sollposition des Werkstücks (12) ermittelt wird und,
- für die Menge der Messpunkte eine Mehrzahl von lokalen Minima und/oder eine Mehrzahl von lokalen Maxima der Abweichung ermittelt wird,
**dadurch gekennzeichnet, dass**
- abhängig von zumindest einem der lokalen Minima und/oder einem der lokalen Maxima zumindest eine der folgenden Maßnahmen ergriffen wird:
a) ein Prozess der Herstellung des vermessenen Werkstücks (12) und typgleicher Werkstücke wird verändert,
b) das vermessene Werkstück (12) und/oder ein in einem gleichartigen Prozess wie das vermessene Werkstück (12) hergestelltes Werkstück wird nachbearbeitet,
c) es wird ermittelt, ob eine während der Vermessung auf das vermessene Werkstück (12) einwirkende Last zu einer akzeptablen oder inakzeptablen Verformung geführt hat,
d) eine Vermessung des Werkstücks (12) wird wiederholt und/oder verfeinert,
e) es wird ermittelt, ob ein bei der Herstellung des vermessenen Werkstücks (12) verwendetes Werkzeug zur Herstellung von Werkstücken desselben Typs weiter verwendet wird,
- lokale Bereiche festgelegt sind oder werden, für die ein lokales Extremum, nämlich eines der lokalen Maxima oder eines der lokalen Minima, ermittelt wird und
- jeder der lokalen Bereiche in Bezug auf einen der Messpunkte eine Umgebung des Messpunktes bildet, wobei der Messpunkt im Zentrum des lokalen Bereichs liegt.

2. Verfahren nach Anspruch 1, wobei das Verfahren die Vermessung des Werkstücks (12) durch zumindest ein Koordinatenmessgerät (1) und die Erzeugung der auszuwertenden Messdaten einschließt.

3. Verfahren nach Anspruch 1 oder 2, wobei eine Größe der lokalen Bereiche festgelegt wird und/oder ermittelt wird.

4. Verfahren nach Anspruch 3, wobei anhand eines vorgegebenen Kriteriums ermittelt wird, ob Ergebnisse einer Ermittlung der lokalen Minima und/oder Maxima akzeptabel sind oder nicht, wobei die Größe der lokalen Bereiche zumindest in Bezug auf eine Mehrzahl der lokalen Bereiche verändert wird, wenn die Ermittlung der lokalen Minima und/oder Maxima nicht akzeptabel ist, wobei zumindest in Bezug auf die lokalen Bereiche, deren Größe verändert worden ist, eine Mehrzahl von lokalen Minima und/oder eine Mehrzahl von lokalen Maxima der Abweichung ermittelt wird und wobei zumindest eine der oben genannten Maßnahmen a) bis e) abhängig von zumindest einem dieser Mehrzahl der lokalen Minima und/oder abhängig von zumindest einem dieser Mehrzahl der lokalen Maxima ergriffen wird.

5. Verfahren nach Anspruch 3 oder 4, wobei die Größe der lokalen Bereiche abhängig von
- zumindest einer Abmessung des Werkstücks (12),
- der Menge der Messpunkte und insbesondere von der Punktdichte der Messpunkte und/oder
- einer zulässigen Toleranz der Sollabweichung
festgelegt wird.

6. Verfahren nach einem der vorhergehenden Ansprüche, wobei die lokalen Extrema, die jeweils für die festgelegten lokalen Bereiche ermittelt werden, in dem jeweiligen lokalen Bereich ein absolutes Extremum sind.

7. Verfahren nach einem der vorhergehenden Ansprüche, wobei für jeden der Messpunkte einer der lokalen Bereiche definiert wird, in dessen Zentrum der jeweilige Messpunkt liegt.

8. Verfahren nach einem der vorhergehenden Ansprüche, wobei jeder der Messpunkte, für den ermittelt wird, ob die für ihn bestimmte und somit ihm zugeordnete Abweichung seiner Position zu einer Sollposition des Werkstücks (12) ein Extremum bildet, im Zentrum eines der lokalen Bereiche liegt.

9. Vorrichtung zur Durchführung des Verfahrens nach einem der vorhergehenden Ansprüche, wobei
- die Vorrichtung eine Abweichungsermittlungseinrichtung (15) aufweist, die ausgestaltet ist, für Messpunkte einer Menge von Messpunkten, die durch aus der Vermessung des Werkstücks (12) erhaltene Koordinaten bestimmt sind, jeweils eine Abweichung einer Position des Messpunktes zu einer Sollposition des Werkstücks (12) zu ermitteln, und
- die Vorrichtung eine Extremumsermittlungseinrichtung (16) aufweist, die ausgestaltet ist eine Mehrzahl von lokalen Minima und/oder eine Mehrzahl von lokalen Maxima der Abweichung zu ermitteln,
**dadurch gekennzeichnet, dass**
- die Vorrichtung eine Maßnahmeneinrichtung (18) aufweist, die ausgestaltet ist abhängig von zumindest einem der lokalen Minima und/oder einem der lokalen Maxima zumindest eine der folgenden Maßnahmen auszulösen:
a) ein Prozess der Herstellung des vermessenen Werkstücks (12) und typgleicher Werkstücke wird verändert,
b) das vermessene Werkstück (12) und/oder ein in einem gleichartigen Prozess wie das vermessene Werkstück (12) hergestelltes Werkstück wird nachbearbeitet,
c) es wird ermittelt, ob eine während der Vermessung auf das vermessene Werkstück (12) einwirkende Last zu einer akzeptablen oder inakzeptablen Verformung geführt hat,
d) eine Vermessung des Werkstücks (12) wird wiederholt und/oder verfeinert,
e) es wird ermittelt, ob ein bei der Herstellung des vermessenen Werkstücks (12) verwendetes Werkzeug zur Herstellung von Werkstücken desselben Typs weiter verwendet wird,
- die Vorrichtung ausgestaltet ist, lokale Bereiche festzulegen oder zu empfangen und für die lokalen Bereiche ein lokales Extremum, nämlich eines der lokalen Maxima oder eines der lokalen Minima, zu ermitteln,
wobei jeder der lokalen Bereiche in Bezug auf einen der Messpunkte eine Umgebung des Messpunktes bildet, wobei der Messpunkt im Zentrum des lokalen Bereichs liegt.

10. Anordnung mit einer Vorrichtung nach Anspruch 9, wobei die Anordnung ferner zumindest ein Koordinatenmessgerät (1) aufweist, das ausgestaltet ist, die Vermessung des Werkstücks (12) auszuführen und die auszuwertenden Messdaten zu erzeugen.

## Claims

1. Method for evaluating measurement data from the measurement of a workpiece (12) by way of at least one coordinate measuring machine (1), wherein
- in each case a deviation of a position of a measurement point from a target position of the workpiece (12) is ascertained for measurement points of a set of measurement points that are determined by coordinates obtained from the measurement of the workpiece (12), and
- a plurality of local minima and/or a plurality of local maxima of the deviation is ascertained for the set of measurement points,
**characterized in that**
- at least one of the following measures is taken depending on at least one of the local minima and/or one of the local maxima:
a) a production process of the measured workpiece (12) and workpieces of the same type is changed,
b) the measured workpiece (12) and/or a workpiece produced in the same type of process as the measured workpiece (12) is reworked,
c) it is ascertained whether a load acting on the measured workpiece (12) during the measurement led to an acceptable or unacceptable deformation,
d) a measurement of the workpiece (12) is repeated and/or refined,
e) it is ascertained whether a tool used in the production of the measured workpiece (12) continues to be used to produce workpieces of the same type,
- local regions are defined for which a local extremum, namely one of the local maxima or one of the local minima, is ascertained, and
- each of the local regions forms, in relation to one of the measurement points, an environment of the measurement point, wherein the measurement point is located in the centre of the local region.

2. Method according to Claim 1, wherein the method includes measuring the workpiece (12) by way of at least one coordinate measuring machine (1) and generating the measurement data to be evaluated.

3. Method according to Claim 1 or 2, wherein a size of the local regions is defined and/or ascertained.

4. Method according to Claim 3, wherein a predefined criterion is used as a basis to ascertain whether or not results of ascertaining the local minima and/or maxima are acceptable, wherein the size of the local regions is changed at least in relation to a plurality of the local regions if the ascertaining of the local minima and/or maxima is unacceptable, wherein a plurality of local minima and/or a plurality of local maxima of the deviation is ascertained at least in relation to the local regions the size of which has been changed, and wherein at least one of abovementioned measures a) to e) is taken depending on at least one of this plurality of local minima and/or depending on at least one of this plurality of local maxima.

5. Method according to Claim 3 or 4, wherein the size of the local regions is defined depending on
- at least one dimension of the workpiece (12),
- the set of measurement points, and in particular the point density of the measurement points and/or
- a permissible tolerance of the target deviation.

6. Method according to one of the preceding claims, wherein the local extrema respectively ascertained for the defined local regions are an absolute extremum in the respective local region.

7. Method according to one of the preceding claims, wherein one of the local regions is defined for each of the measurement points, the respective measurement point being located in the centre of said local region.

8. Method according to one of the preceding claims, wherein each of the measurement points for which it is ascertained whether the deviation, determined therefor and thus assigned thereto, of its position from a target position of the workpiece (12) forms an extremum is located in the centre of one of the local regions.

9. Device for carrying out the method according to one of the preceding claims, wherein
- the device has a deviation ascertainment apparatus (15) that is designed to ascertain in each case a deviation of a position of a measurement point from a target position of the workpiece (12) for measurement points of a set of measurement points that are determined by coordinates obtained from the measurement of the workpiece (12), and
- the device has an extremum ascertainment apparatus (16) that is designed to ascertain a plurality of local minima and/or a plurality of local maxima of the deviation,
**characterized in that**
- the device has a measure apparatus (18) that is designed to trigger at least one of the following measures depending on at least one of the local minima and/or one of the local maxima:
a) a production process of the measured workpiece (12) and workpieces of the same type is changed,
b) the measured workpiece (12) and/or a workpiece produced in the same type of process as the measured workpiece (12) is reworked,
c) it is ascertained whether a load acting on the measured workpiece (12) during the measurement led to an acceptable or unacceptable deformation,
d) a measurement of the workpiece (12) is repeated and/or refined,
e) it is ascertained whether a tool used in the production of the measured workpiece (12) continues to be used to produce workpieces of the same type,
- the device is designed to define or receive local regions and to ascertain a local extremum, namely one of the local maxima or one of the local minima, for the local regions,
wherein each of the local regions forms, in relation to one of the measurement points, an environment of the measurement point, wherein the measurement point is located in the centre of the local region.

10. Arrangement comprising a device according to Claim 9, wherein the arrangement furthermore has at least one coordinate measuring machine (1) that is designed to carry out the measurement of the workpiece (12) and to generate the measurement data to be evaluated.

## Revendications

1. Procédé d'évaluation de données de mesure à partir de la mesure d'une pièce à usiner (12) par au moins un appareil de mesure de coordonnées (1),
- un écart d'une position du point de mesure par rapport à une position de consigne de la pièce à usiner (12) étant chaque fois déterminé pour des points de mesure d'une quantité de points de mesure, qui sont définis par des coordonnées obtenues à partir de la mesure de la pièce à usiner (12),
- une pluralité de minima locaux et/ou une pluralité de maxima locaux de l'écart étant déterminées pour la quantité de points de mesure,
**caractérisé en ce que**
- au moins une des mesures suivantes est prise en fonction d'au moins un des minima locaux et/ou d'un des maxima locaux :
a) un processus de fabrication de la pièce à usiner (12) mesurée et de pièces à usiner identiques est modifié,
b) la pièce à usiner (12) mesurée et/ou une pièce à usiner fabriquée dans un procédé similaire à celui de la pièce à usiner (12) mesurée sont post-traitées,
c) il est déterminé si une charge agissant sur la pièce à usiner (12) mesurée pendant la mesure a entraîné une déformation acceptable ou inacceptable,
d) une mesure de la pièce à usiner (12) est répétée et/ou affinée,
e) il est déterminé si un outil utilisé lors de la fabrication de la pièce à usiner (12) mesurée est encore utilisé pour la fabrication de pièces à usiner du même type,
- des zones locales sont ou seront fixées, pour lesquelles un extremum local, à savoir un des maxima locaux ou un des minima locaux, est déterminé et
- chacune des zones locales forme un environnement du point de mesure par rapport à un des points de mesure, le point de mesure se trouve au centre de la zone locale.

2. Procédé selon la revendication 1, le procédé incluant la mesure de la pièce à usiner (12) par au moins un appareil de mesure de coordonnées (1) et la génération des données de mesure à évaluer.

3. Procédé selon la revendication 1 ou 2, une taille des zones locales étant fixée et/ou déterminée.

4. Procédé selon la revendication 3, un critère prédéfini permettant de déterminer si des résultats d'une détermination des minima et/ou maxima locaux sont acceptables ou non, la taille des zones locales étant modifiée au moins par rapport à une pluralité des zones locales, lorsque la détermination des minima et/ou maxima locaux n'est pas acceptable, une pluralité de minima locaux et/ou une pluralité de maxima locaux de l'écart étant déterminées au moins par rapport aux zones locales dont la taille a été modifiée, et au moins une des mesures a) à e) mentionnées plus haut étant prise en fonction d'au moins un de cette pluralité des minima locaux et/ou en fonction d'au moins un de cette pluralité des maxima locaux.

5. Procédé selon la revendication 3 ou 4, la taille des zones locales étant fixée en fonction
- d'au moins une dimension de la pièce à usiner (12),
- de la quantité des points de mesure et en particulier de la densité de points des points de mesure et/ou
- d'une tolérance admise de l'écart de consigne

6. Procédé selon l'une des revendications précédentes, les extrema locaux, qui sont déterminés respectivement pour les zones locales fixées, étant un extremum absolu dans la zone locale respective.

7. Procédé selon l'une des revendications précédentes, une des zones locales, au centre de laquelle le point de mesure respectif se situe, étant définie pour chacun des points de mesure.

8. Procédé selon l'une des revendications précédentes, chacun des points de mesure pour lequel il est déterminé si l'écart, qui est défini pour lui et ainsi lui est associé, de sa position par rapport à une position de consigne de la pièce à usiner (12) constitue un extremum, se situant au centre d'une des zones locales.

9. Dispositif pour la mise en œuvre du procédé selon l'une des revendications précédentes,
- le dispositif comportant un équipement de détermination d'écart (15), qui est configuré pour déterminer respectivement un écart d'une position du point de mesure par rapport à une position de consigne de la pièce à usiner (12) pour des points de mesure d'une quantité de points de mesure, qui sont définis par des coordonnées obtenues à partir de la mesure de la pièce à usiner (12), et
- le dispositif comportant un équipement de détermination d'extremum (16), qui est configuré pour déterminer une pluralité de minima locaux et/ou une pluralité de maxima locaux de l'écart,
**caractérisé en ce que**
- le dispositif comporte un équipement d'exécution de mesures (18), qui est configuré pour déclencher, en fonction d'au moins un des minima locaux et/ou d'un des maxima locaux, au moins l'une des mesures suivantes :
a) un processus de fabrication de la pièce à usiner (12) mesurée et de pièces à usiner identiques est modifié,
b) la pièce à usiner (12) mesurée et/ou une pièce à usiner fabriquée dans un procédé similaire à celui de la pièce à usiner (12) mesurée sont post-traitées,
c) il est déterminé si une charge agissant sur la pièce à usiner (12) mesurée pendant la mesure a entraîné une déformation acceptable ou inacceptable,
d) une mesure de la pièce à usiner (12) est répétée et/ou affinée,
e) il est déterminé si un outil utilisé lors de la fabrication de la pièce à usiner (12) mesurée est encore utilisé pour la fabrication de pièces à usiner du même type,
- le dispositif est configuré pour fixer ou recevoir des zones locales et pour déterminer pour les zones locales un extremum local, à savoir un des maxima locaux ou un des minima locaux,
chacune des zones locales formant un environnement du point de mesure par rapport à un des points de mesure, le point de mesure se situant au centre de la zone locale.

10. Ensemble avec un dispositif selon la revendication 9, l'ensemble comportant en outre au moins un appareil de mesure de coordonnées (1), qui est configuré pour exécuter la mesure de la pièce à usiner (12) et pour générer les données de mesure à évaluer.
